(19) Europäisches Patentamt
European Patent Office
Office européen des brevets

(11) **EP 2 522 951 A1**

(12) **EUROPEAN PATENT APPLICATION**
published in accordance with Art. 153(4) EPC

(43) Date of publication:
**14.11.2012 Bulletin 2012/46**

(21) Application number: **10842182.7**

(22) Date of filing: **16.12.2010**

(51) Int Cl.:
**G01B 11/00** *(2006.01)*   **G01C 3/06** *(2006.01)*
**G06T 1/00** *(2006.01)*   **H04N 5/225** *(2006.01)*
**H04N 13/02** *(2006.01)*   **G01B 11/245** *(2006.01)*

(86) International application number:
**PCT/JP2010/072651**

(87) International publication number:
**WO 2011/083669 (14.07.2011 Gazette 2011/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2010 JP 2010000917**

(71) Applicant: **Konica Minolta Advanced Layers, Inc.
Hachioji-shi
Tokyo 192-8505 (JP)**

(72) Inventor: **NORITA Toshio
Tokyo 191-8511 (JP)**

(74) Representative: **HOFFMANN EITLE
Patent- und Rechtsanwälte
Arabellastrasse 4
81925 München (DE)**

(54) **STEREO CAMERA DEVICE**

(57) Degradation of a three-dimensional measurement accuracy of a stereo camera device that takes an image of an object in a wide wavelength band is suppressed. In order to achieve the above object, a stereo camera device includes: stereo image acquiring means for taking an image of light from the object to acquire a stereo image; corresponding point searching means for performing a corresponding point search between images constituting the stereo image; wavelength acquiring means for acquiring a representative wavelength of a wavelength component of the light; parameter acquiring means for acquiring each parameter value corresponding to the representative wavelength with respect to at least one of camera parameters of the stereo image acquiring means in which the parameter value fluctuates according to the wavelength component of the light; and three-dimensional information acquiring means for acquiring three-dimensional information on the object from a result of the corresponding point search using the each parameter value.

FIG. 2

**Description**

TECHNICAL FIELD

The present invention relates to a stereo camera device that acquires three-dimensional information on an object based on a stereo image of the object.

BACKGROUND ART

A stereo camera device, which takes a stereo image of an object with a stereo camera including plural image capturing optical systems (cameras) and acquires three-dimensional information on the object from the taken stereo image by a triangulation principle in which parameters for 3D reconstruction such as a focal length and a base-line length of the image capturing optical system are used, is known as a device that acquires the three-dimensional information on the object (for example, see Patent Document 1).

Recently, the three-dimensional information on the object is beginning to be utilized in systems, such as a monitoring system that detects an intrusion of a suspicious individual or abnormality, and an in-vehicle system that assists running safety of a vehicle, which need to work in not only daytime but also nighttime, and the stereo camera device is beginning to be applied to the systems.

The object is mainly illuminated with sunlight in the daytime. On the other hand, in the nighttime, the object is in various states such as a state in which the object is not illuminated but the object emits an infrared ray, a state in which the object is illuminated with visible light, and a state in which the object is illuminated with the infrared ray emitted from a night-vision system of the in-vehicle system.

Therefore, the stereo camera device that is applied to the monitoring system and the in-vehicle system needs to take an image of the object in a wide wavelength band from a visible light range to an infrared range to accurately obtain the three-dimensional information on the object.

PRIOR ART DOCUMENT

PATENT DOCUMENT

Patent Document 1: Japanese Patent Application Laid-Open No. 2007-33315

SUMMARY OF THE INVENTION

PROBLEMS TO BE SOLVED BY THE INVENTION

In the stereo camera device, a distance to the object and a three-dimensional coordinate of the object are measured using camera parameters whose elements include a distance (image point distance) from a principal point of the image capturing optical system to an image capturing plain, aberration information, and the base-line length.

On the other hand, in the image capturing optical system, imaging characteristics such as the focal length and an aberration characteristic fluctuate according to a wavelength of the light passing through the image capturing optical system, and fluctuation ranges of the imaging characteristics are increased with increasing wavelength band of the light. When the focal length fluctuates, the image point distance also fluctuates.

Accordingly, an error of the three-dimensional information on the object, which is acquired by the stereo camera device, is also increased with increasing wavelength band of the light passing through the image capturing optical system of the stereo camera device.

In the stereo camera device of Patent Document 1, state changes of the device such as a temperature change in the device and a tilt of the device are monitored to correct the fluctuation of the parameters for 3D reconstruction, thereby improving a three-dimensional measurement accuracy. However, the stereo camera device of Patent Document 1 does not focus on the fluctuation of the wavelength of the light passing through the image capturing optical system, which is a fluctuation of an environment outside the device, and the fluctuation of the imaging characteristic of the image capturing optical system, which is generated in association with the fluctuation of the wavelength.

Therefore, in the case that the stereo camera device of Patent Document 1 is applied to the system such as the monitoring system and the in-vehicle system, which take the image of the object in the wide wavelength band, unfortunately the three-dimensional measurement accuracy of the stereo camera device is degraded.

The present invention has been devised to solve the problem, and an object of the present invention is to provide a technology for suppressing the degradation of the three-dimensional measurement accuracy of the stereo camera device that takes the image of the object in the wide wavelength band to acquire the three-dimensional information on the object.

## MEANS FOR SOLVING THE PROBLEM

In order to solve the above problem, a stereo camera device according to a first aspect includes: stereo image acquiring means for taking an image of light from an object to acquire a stereo image; corresponding point searching means for performing a corresponding point search between images constituting the stereo image; wavelength acquiring means for acquiring a representative wavelength of a wavelength component of the light; parameter acquiring means for acquiring each parameter value corresponding to the representative wavelength with respect to at least one of camera parameters of the stereo image acquiring means in which the parameter value fluctuates according to the wavelength component; and three-dimensional information acquiring means for acquiring three-dimensional information on the object from a result of the corresponding point search using the each parameter value.

A stereo camera device according to a second aspect is the stereo camera device according to the first aspect, the wavelength acquiring means acquires the representative wavelength based on actual measurement of the light from the object.

A stereo camera device according to a third aspect is the stereo camera device according to the second aspect, the stereo image acquiring means includes an image capturing element having plural spectral sensitivity characteristics, and the wavelength acquiring means acquires the representative wavelength based on an output signal of the image capturing element according to each of the plural spectral sensitivity characteristics.

A stereo camera device according to a fourth aspect is the stereo camera device according to the first aspect, the wavelength acquiring means acquires the representative wavelength based on well-known wavelength information on illumination light illuminating the object.

A stereo camera device according to a fifth aspect is the stereo camera device according to the fourth aspect, and the stereo camera device according to the fifth aspect further includes floodlighting means for floodlighting the illumination light.

A stereo camera device according to a sixth aspect is the stereo camera device according to the first aspect, and the parameter acquiring means acquires the each parameter value using a camera parameter table in which well-known parameter values corresponding to at least two predetermined wavelengths are recorded with respect to the at least one of camera parameters.

A stereo camera device according to a seventh aspect is the stereo camera device according to the first aspect, and the parameter acquiring means acquires the each parameter value using each function that defines a relationship between the wavelength component and a parameter value with respect to the at least one of camera parameters.

A stereo camera device according to an eighth aspect is the stereo camera device according to the first aspect, and the at least one of camera parameters includes at least one of focal length information and aberration information on an image capturing optical system of the stereo image acquiring means.

## ADVANTAGEOUS EFFECT OF THE INVENTION

In the stereo camera devices according to the first to eighth aspects, the representative wavelength of the wavelength component of the light from the object is acquired, and the parameter value corresponding to the representative wavelength is acquired with respect to at least one of camera parameters, in each of which the parameter value fluctuates according to the wavelength component of the light from the object, and used to acquire the three-dimensional information on the object. Therefore, the degradation of the three-dimensional measurement accuracy of the stereo camera device can be suppressed even if the stereo camera device takes the image of the object in the wide wavelength band.

## BRIEF DESCRIPTION OF THE DRAWINGS

FIG. 1 is a view illustrating an appearance of a configuration example of a stereo camera device according to an embodiment.
FIG. 2 is a view illustrating a functional block of a stereo camera device according to an embodiment.
FIG. 3 is a view illustrating a functional block of a stereo camera.
FIG. 4 is a view explaining an example of a coordinate system according to a stereo camera device.
FIG. 5 is a view illustrating a pixel array of an image capturing element of a standard camera.
FIG. 6 is a view illustrating a pixel array of an image capturing element of a reference camera.
FIG. 7 is a view illustrating a spectral sensitivity characteristic of an image capturing element of a stereo camera.

FIG. 8 is a view illustrating a spectral sensitivity characteristic of an image capturing element of a stereo camera.
FIG. 9 is a view explaining an example of corresponding point searching processing.
FIG. 10 is a view illustrating a flowchart of three-dimensional information measurement according to an embodiment.
FIG. 11 is a view illustrating a functional block of a stereo camera device according to a modification.
FIG. 12 is a view illustrating a flowchart of three-dimensional information measurement according to a modification.
FIG. 13 is a view illustrating a functional block of a stereo camera device according to a modification.
FIG. 14 is a view illustrating a flowchart of three-dimensional information measurement according to a modification.

EMBODIMENT FOR CARRYING OUT THE INVENTION

<Embodiment>

<Description of Outline of Stereo Camera Device 300A>

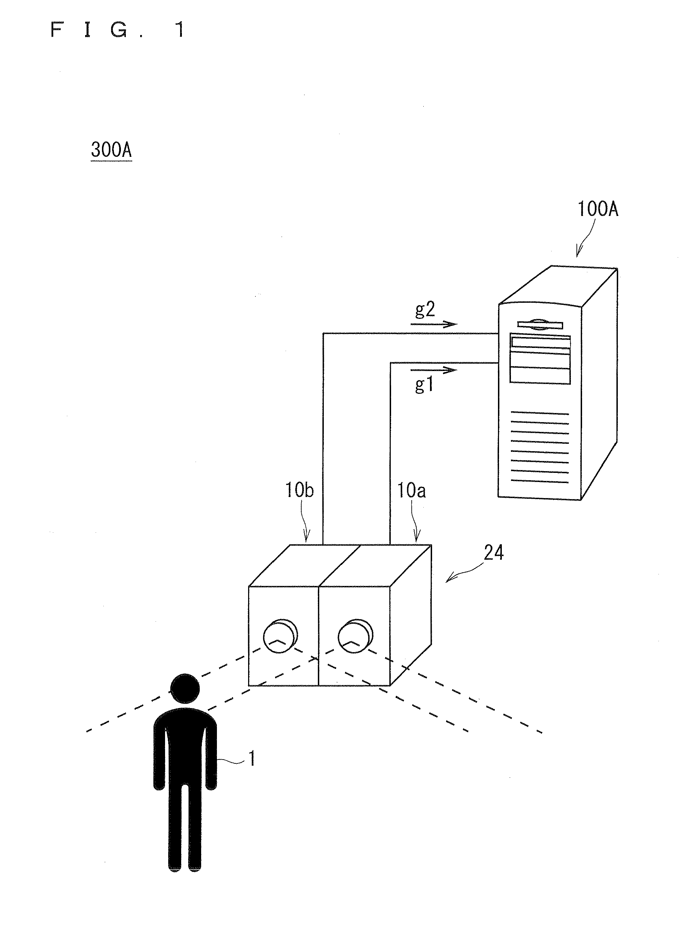

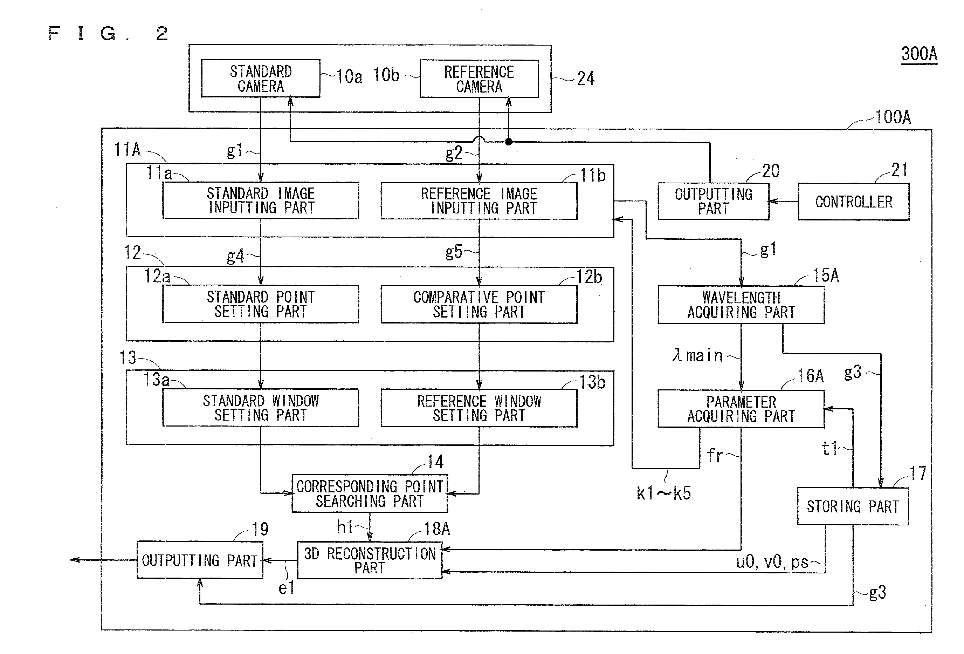

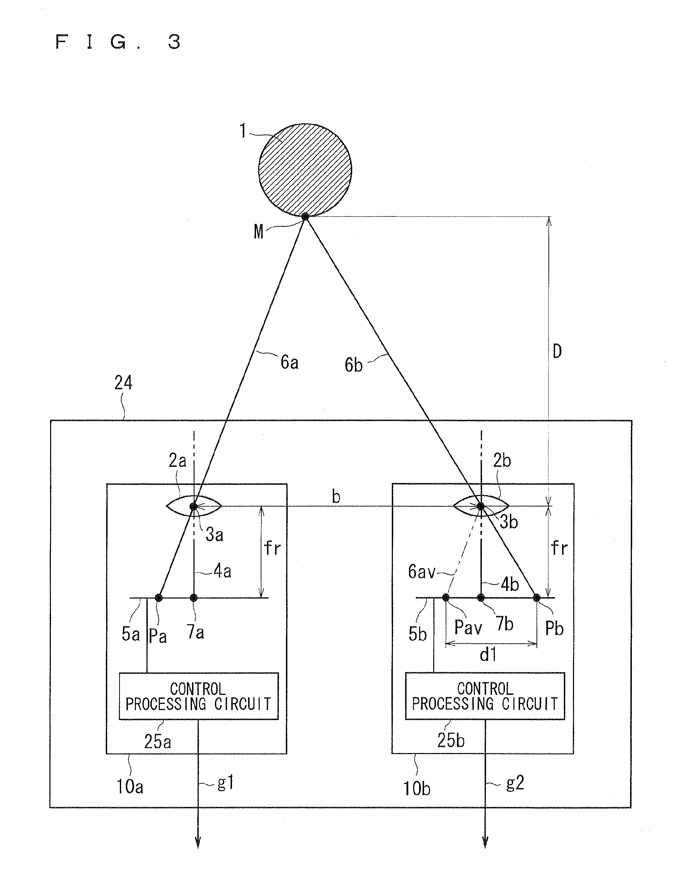

FIG. 1 is a view illustrating an appearance of a configuration example of a stereo camera device 300A according to an embodiment, and FIG. 2 is a view illustrating a functional block of the stereo camera device 300A.
As illustrated in FIGS. 1 and 2, the stereo camera device 300A mainly includes a stereo camera 24 and a control processing device 100A.
The stereo camera 24 includes a standard camera 10a and a reference camera 10b. The stereo camera 24 takes images of an object 1 based on a control signal from the control processing device 100A using each camera, generates an original standard image g1 and an original reference image g2, which are of digital images constituting a stereo image of the object 1, from output signals of the standard camera 10a and the reference camera 10b, and supplies the original standard image g1 and the original reference image g2 to the control processing device 100A.
The control processing device 100A acquires pieces of three-dimensional information e1 (FIG. 2) such as a distance D (FIG. 3) and a three-dimensional coordinate of the object 1 and a display image g3 (FIG. 2) by processing the original standard image g1 and the original reference image g2, which are supplied from the stereo camera 24. The control processing device 100A supplies the three-dimensional information e1 and the display image g3 to external systems (not illustrated) such as a monitoring system and an in-vehicle system.
Because the external systems need to work in not only the daytime but also the nighttime, light entering an image capturing optical system of the stereo camera device 300A from the object 1 and passing through the image capturing optical system is the light, such as sunlight and various kinds of illumination light that are reflected from an object surface and radiant light of an infrared ray emitted from the object, which is distributed in a wide wavelength band from a visible light range to an infrared range.

<Configuration and Operation of Stereo Camera>

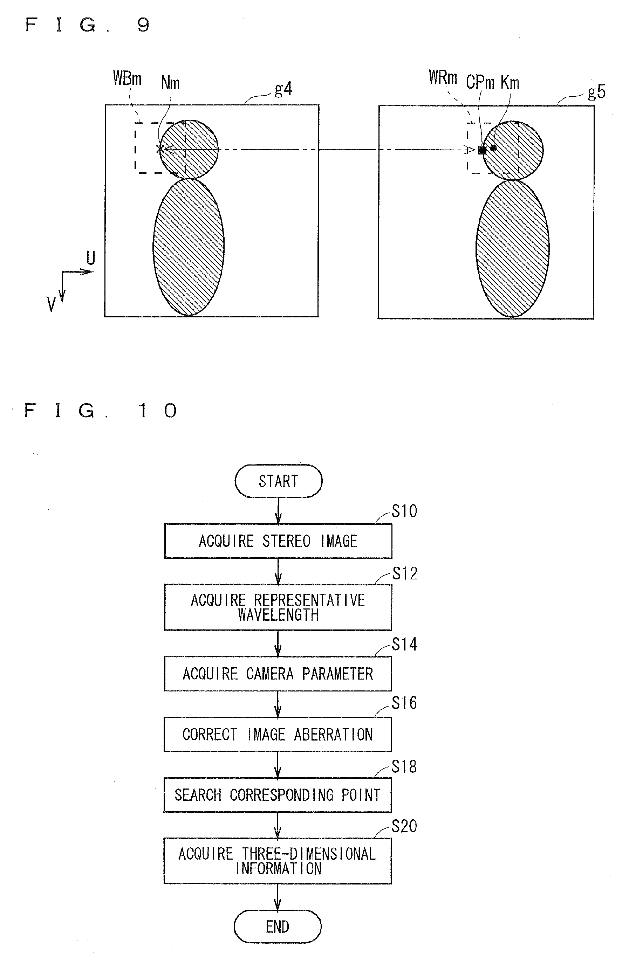

A configuration and an operation of the stereo camera 24 will be described below. FIG. 10 is a view illustrating a flowchart of three-dimensional information measurement of the stereo camera device 300A, and the flowchart in FIG. 10 is properly referred to in the following description of the stereo camera device 300A.
FIG. 3 is a view illustrating a functional block of the stereo camera 24. As illustrated in FIG. 3, the stereo camera 24 mainly includes the standard camera 10a and the reference camera 10b, and the standard camera 10a mainly includes an image capturing optical system 2a, an image capturing element 5a, and a control processing circuit 25a. The reference camera 10b mainly includes an image capturing optical system 2b, an image capturing element 5b, and a control processing circuit 25b.
The stereo camera 24 takes images of the light from the object 1 using the standard camera 10a and the reference camera 10b, acquires the original standard image g1 and the original reference image g2, which constitute the stereo image (Step S10 in the flowchart of the FIG. 10), and supplies the original standard image g1 and the original reference image g2 to the control processing device 100A.
Each of the image capturing optical systems 2a and 2b mainly includes a thin lens and a lens barrel (not illustrated) that supports the lens, and the image capturing optical systems 2a and 2b are optical systems that form the images of the object 1 on the image capturing elements 5a and 5b, respectively. At this point, the image of an object point M on the object 1 is formed as image points Pa and Pb on the image capturing elements 5a and 5b along principal rays 6a and 6b passing through principal points 3a and 3b, respectively.
A virtual principal ray 6av is one in which the principal ray 6a is translated so as to pass through the principal point 3b, and a virtual image point Pav corresponding to the image point Pa is set onto the image capturing element 5b along the virtual principal ray 6av.
Optical center positions 7a and 7b of the standard camera 10a and the reference camera 10b are an intersection point of the image capturing element 5a and an optical axis 4a and an intersection point of the image capturing element 5b and an optical axis 4b, respectively, and a base-line length b between the image capturing optical systems 2a and 2b is a distance between the principal points 3a and 3b.

A distance d1 between the virtual image point Pav and the image point Pb is a distance between image point positions when the image points Pa and Pb corresponding to the same object point M on the object 1 are expressed by a common image coordinate system in which the coordinates of the optical center position are equal to each other, and the distance d1 corresponds to a parallax between the standard camera 10a and the reference camera 10b with respect to the object point M.

An image point distance fr is a distance between the image capturing optical system 2a and the image capturing element 5a and a distance between the image capturing optical system 2b and the image capturing element 5b. The image point distance fr is one in which a feed amount of the image capturing optical system is added to a focal length f, and usually the image point distance fr is slightly longer than the focal length f. The image point distance fr fluctuates in a similar way with the focal length f in conjunction with a fluctuation of the focal length f.

At this point, for the stereo camera 24, the focal lengths f of the image capturing optical systems 2a and 2b are equal to each other, and the optical axes 4a and 4b of the image capturing optical systems 2a and 2b are parallel to each other. Principal planes of the image capturing optical systems 2a and 2b are flush with each other, and the principal points 3a and 3b of the image capturing optical systems 2a and 2b exist on the principal planes, respectively. The image capturing elements 5a and 5b of the image capturing optical systems are flush with each other.

In order to easily perform corresponding point searching processing between the original standard image g1 and the original reference image g2, the image capturing elements 5a and 5b are placed such that the scanning lines of the image capturing elements 5a and 5b become parallel to each other.

Although usually an error is generated with respect to the configuration condition in the actual configuration, the state equal to the case that each functional element of the stereo camera 24 satisfies the configuration condition can be obtained such that the control processing device 100A performs processing (also referred to as "parallelizing processing") to the original standard image g1 and the original reference image g2 supplied from the standard cameras 10a and 10b using camera parameters.

Although the image capturing optical systems 2a and 2b have aberrations, the aberrations are corrected by processing ("aberration correction processing") performed by the control processing device 100A.

For example, the image capturing elements 5a and 5b are image capturing elements each of which is constructed by a CCD image sensor or a CMOS image sensor, which has the number of effective pixels of a VGA (640 by 480 pixels) size. The image capturing elements 5a and 5b generate image signals according to intensity of the images formed on the image capturing elements 5a and 5b, and supply the image signals to the control processing circuit 25a and the control processing circuit 25b.

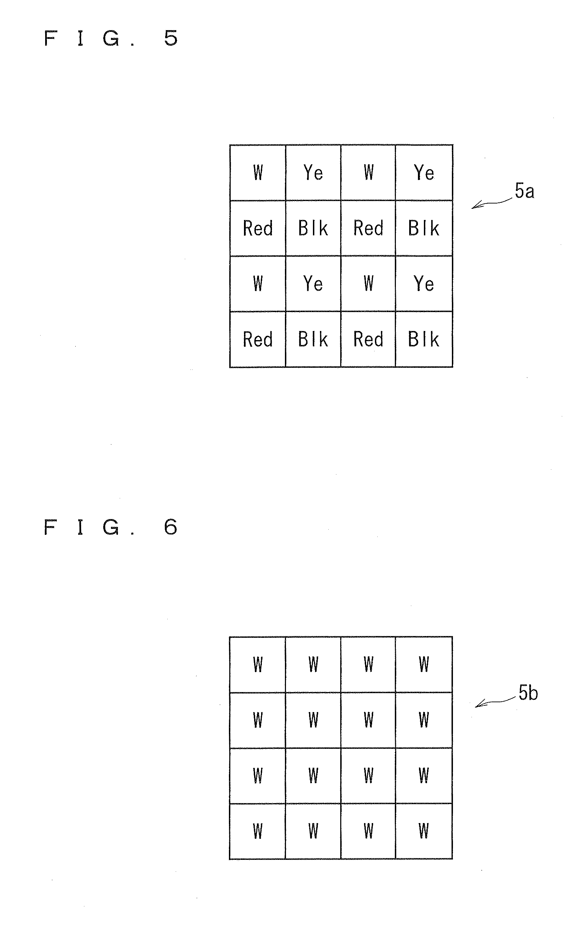

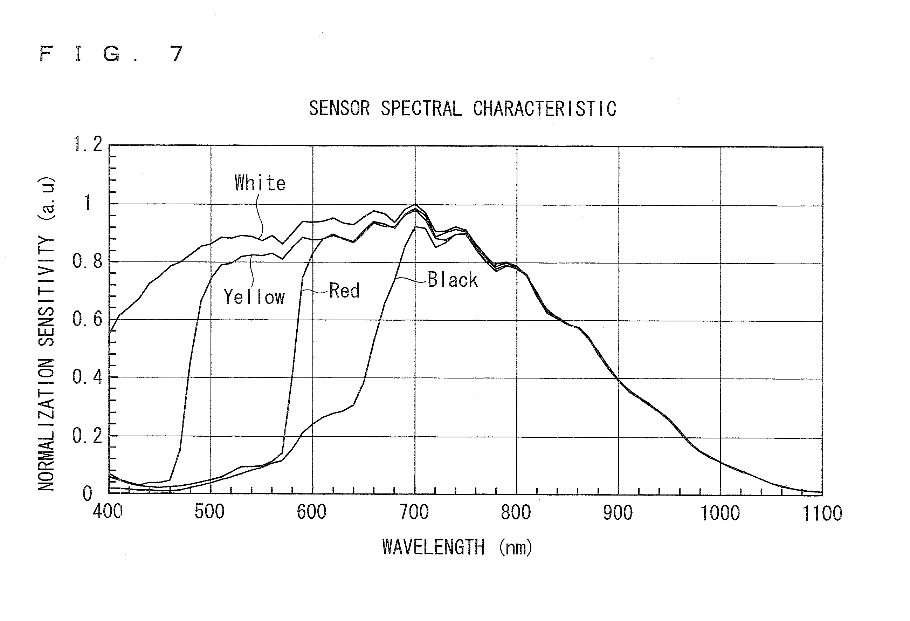

FIG. 5 is a view illustrating a pixel array in a part of the image capturing element 5a of the standard camera 10a, and FIG. 6 is a view illustrating a pixel array of a part of the image capturing element 5b of the reference camera 10b. FIG. 7 is a view illustrating a spectral sensitivity characteristic of the image capturing element of the stereo camera 24.

As illustrated in FIG. 5, the image capturing element 5a is constructed by a Beyer array of cells including four filters having different spectral sensitivity characteristics of White (W), Yellow (Ye), Red, and Black (Blk). The cell including each filter has a spectral sensitivity characteristic in FIG. 7, and a color characteristic of the image capturing element 5a is constructed by the array of the cells in FIG. 5.

That is, as illustrated in FIG. 7, the image capturing element 5a has sensitivity on a longer wavelength side compared with a usual image sensor that has the sensitivity characteristic only in the visible wavelength band, and the image capturing element 5a has a spectral sensitivity characteristic with which the image is taken in a dark field.

A representative wavelength λmain (FIG. 2) of a wavelength component of the light from the object 1 is acquired such that a wavelength acquiring part 15A (FIG. 2) processes the original standard image g1, which is generated based on the output from the image capturing element 5a, and a parameter acquiring part 16A (FIG. 2) acquires a camera parameter according to the representative wavelength λmain. The acquisition of the representative wavelength λmain and the acquisition of the camera parameter according to the representative wavelength λmain are described later in the descriptions of the wavelength acquiring part 15A and the parameter acquiring part 16A.

As illustrated in FIG. 6, the image capturing element 5b is configured such that the cells including only the white (W) filters having the sensitivity in the visible light range and the infrared range are arrayed, and the image capturing element 5b is used to generate a monochrome image. The image capturing element 5a and the image capturing element 5b are constructed by the cells having the common size.

The monochrome image based on the outputs of the cells including the white (W) filters is an image, in which the image of the light from the object is taken in the widest wavelength band, in images based on the outputs of the cells including the four filters having the different spectral sensitivity characteristics in the image capturing element 5a. Therefore, corresponding point searching processing is performed between the monochrome image based on the outputs of the cells including the white (W) filters of the image capturing element 5a and the monochrome image based on the outputs of the cells of the image capturing element 5b.

One of the cameras constituting the stereo camera 24 has the above color characteristic, and the other camera has the spectral sensitivity characteristic of only the white filter, so that the stereo camera device 300A can acquire both color information on the object 1 and three-dimensional information.

Three-dimensional measurement can be performed, even if both the cameras constituting the stereo camera 24 have the color characteristics, or even if both the cameras have the spectral sensitivity characteristic of only the white filter.

In the case that both the cameras have the spectral sensitivity characteristic of only the white filter, the three-dimensional information can be obtained while the color information cannot be obtained. However, in the monochrome image obtained from the image capturing element having the spectral sensitivity characteristic of only the white filter, because pixel density is increased compared with the monochrome image obtained from the image capturing element having the color characteristic, the three-dimensional data can be acquired with a higher accuracy.

In the case that both the cameras of the stereo camera 24 have the spectral sensitivity characteristic of only the white filter, for example, the representative wavelength λmain of the wavelength component of the light from the object 1 can be obtained such that an optical path of one of the cameras is divided by a semitransparent mirror to separately provide an image sensor having the same color characteristic as the image capturing element 5a.

The control processing circuit 25a and the control processing circuit 25b in FIG. 3 process the image signals supplied from the image capturing elements 5a and 5b to transform the image signals into digital images. Therefore, the control processing circuit 25a and the control processing circuit 25b generate the original standard image g1 and the original reference image g2 according to the numbers of effective pixels of the image capturing elements and supply the original standard image g1 and the original reference image g2 to the control processing device 100A.

In the case that a required specification of a system is a content that "a distance of an object 30 meters ahead is most accurately measured", the image point distances fr of both the cameras of the stereo camera 24 are previously adjusted to a predetermined value according to the required specification of the system such that the image point distances fr are set to a predetermined image point distance in which the cameras focus best on the object 30 meters ahead. Depending on the required specification of the system, the focal length f may directly be used as the image point distance fr.

In the description, the term of "focal length information" is used as a generic name of the focal length f and the image point distance fr, and the term of "aberration information" is used as a generic name of information providing a relationship between a coordinate at an image point at which the aberration is corrected and a coordinate at an image point before the aberration is corrected. Accordingly, the aberration information includes an aberration reproduction coefficient that reproduces the aberration and an aberration correction coefficient that corrects the aberration.

Each Coordinate System of Stereo Camera 24

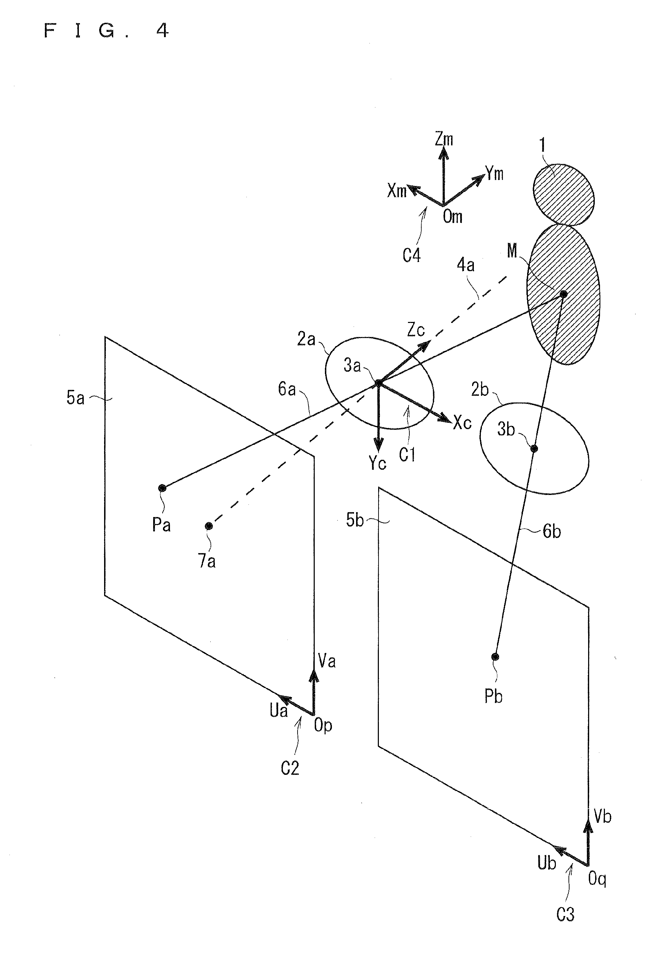

FIG. 4 is a view illustrating a camera coordinate system C1, image coordinate systems C2 and C3, a model coordinate system C4 of the stereo camera 24. In elements in FIG. 4, the same element as that in FIG. 3 is designated by the same symbol as that in FIG. 3, and the description is omitted.

As illustrated in FIG. 4, the camera coordinate system C1 is an orthogonal coordinate system that is provided for the image capturing optical system 2a. An origin of the camera coordinate system C1 is the principal point 3a, and coordinate axes are Xc, Zc, and Yc. A Zc-axis direction is matched with the optical axis 4a, and an Xc-axis is parallel to the scanning line of the image capturing element 5a.

The image coordinate system C2 is an orthogonal coordinate system that expresses a coordinate at each image point in the original standard image g1. An origin of the image coordinate system C2 is a corner portion Op of the image capturing element 5a, and coordinate axes are Ua and Va. A Ua-axis direction is matched with the scanning direction of the image capturing element 5a, and a Va-axis direction is matched with the sub-scanning direction of the image capturing element 5a.

Similarly, the image coordinate system C3 is an orthogonal coordinate system that expresses a coordinate at each image point in the original reference image g2. An origin of the image coordinate system C3 is a corner portion Oq of the image capturing element 5b that is provided with respect to the image capturing optical system 2b, and coordinate axes are Ub and Vb. A Ub-axis direction is matched with the scanning direction of the image capturing element 5b, and a Vb-axis direction is matched with the sub-scanning direction of the image capturing element 5b.

The model coordinate system C4 is an orthogonal coordinate system that is provided based on the object 1. An origin of the model coordinate system C4 is a point Om, and coordinate axes are Xm, Ym, and Zm.

<Description of Three-Dimensional Measurement Method of Stereo Camera Device>

A three-dimensional measurement method of the stereo camera device 300A will be described below.

In the case that the parallelizing processing and the aberration correction processing are performed, the distance D from the object point M to the principal planes of the image capturing optical systems 2a and 2b in FIG. 3 is given by an equation (1) using a parallax d in which a strain of the parallax d1 is removed through the aberration correction processing, the image point distance fr, and the base-line length b between the image capturing optical systems 2a and 2b.

[Formula 1]

$$D = \frac{fr \times b}{d} \quad \cdots (1)$$

A relationship between a coordinate Mc at the object point M on the object 1, which is expressed by the camera coordinate system C1 in FIG. 4, and a coordinate Pa' corresponding to the object point M after the aberration correction processing, which is expressed by the image coordinate system C2 at the image point Pa on the image capturing element 5a is given by an equation (2).

[Formula 2]

$$P_a' = \frac{1}{Z_c} \begin{bmatrix} \dfrac{fr}{ps} & 0 & u_0 \\ 0 & \dfrac{fr}{ps} & v_0 \end{bmatrix} M_c \quad \cdots (2)$$

where

Coordinate (image coordinate system C2) at image point Pa
$Pa' = (Ua, Va)^t$ : on image capturing element 5a after aberration correction
$M_c = (Xc, Yc, Zc)^t$ : Coordinate (camera coordinate system C1) at object point M
ps: Pixel length of image capturing element
fr : Image point distances in Xc- and Yc-directions
U0, V0: Optical center position (image coordinate system C2)

A content of the aberration correction processing is given by an equation (3).

[Formula 3]

ただし、

$$P_a' = (k_1 r_a^2 + k_2 r_a^4 + k_3 r_a^6) \overline{P_a} + \begin{bmatrix} 2k_4 \overline{u_a}\,\overline{v_a} + k_5 (r_a^2 + 2\overline{u_a}^2) \\ k_4 (r_a^2 + 2\overline{v_a}^2) + 2k_5 \overline{u_a}\,\overline{v_a} \end{bmatrix} + \begin{bmatrix} u_0 \\ v_0 \end{bmatrix} \quad \cdots (3)$$

$$P_a' = \begin{bmatrix} u_a' \\ v_a' \end{bmatrix} :$$ Coordinate (image coordinate system C2) at image point Pa' after aberration correction at image point Pa on image capturing element 5a

$$P_a = \begin{bmatrix} u_a \\ v_a \end{bmatrix} :$$ Coordinate at image point Pa on image capturing element 5a (image coordinate system C2)

$$\overline{P_a} = \begin{pmatrix} u_a - u_0 \\ v_a - v_0 \end{pmatrix} = \begin{pmatrix} \overline{u_a} \\ \overline{v_a} \end{pmatrix} , \quad r_a{}' = \| \overline{P_a} \|^2$$

In the equations (1) to (3), the image point distance fr, the base-line length b, a pixel size ps of the image capturing element, optical center positions u0 and v0, and aberration correction coefficients k1 to k5 are camera parameters used in the 3D reconstruction. The aberration correction coefficients k1 to k3 are coefficients that correct the aberrations in radial directions of lenses of the image capturing optical systems 2a and 2b, and the aberration correction coefficients k4 and k5 are coefficients that correct the aberrations in directions orthogonal to diameters of the lenses.

Because the distance D of the equation (1) and the coordinate $z_c$ of the equation (2) are identical to each other, the distance D is obtained by substituting the parallax d, in which the aberration is corrected with respect to each of the image points Pa and Pb corresponding to the object point M obtained through corresponding point searching processing, for the equation (1), and $x_c$ and $y_c$ are also obtained by substituting the obtained distance D for $z_c$ of the equation (2).

An equation (4) is one that gives a coordinate transform of a coordinate Mm at the object point M expressed by the model coordinate system C4 into a coordinate Mc expressed by the camera coordinate system C1, and the equation (4) is used in the case that the transform between the coordinate Mc obtained by camera coordinate system C1 and the coordinate Mm is required. In the equation (4), matrices R and T can be obtained by correlating the coordinate Mc and the coordinate Mm to each other with respect to at least three object points M that does not exist on the same straight line.

$$[\text{Formula 4}]$$

$$M_c = RM_n + T \qquad \cdots (4)$$

where

$M_n = (X_m\ y_{m,}\ z_m)^t,\ ;$ Coordinate at object point M in model coordinate system C4
$M_c = (x_c,\ y_c,\ z_c)^t$: Coordinate at object point M in camera coordinate system C1
R : Matrix expressing attitude in model coordinate system C4 with respect to camera coordinate system C1
T: Matrix expressing position in model coordinate system C4 with respect to camera coordinate system C1

Table 1 illustrates an example of a wavelength fluctuation characteristic of the focal length f in each of five kinds of planoconvex lenses in each of which BK7 is used as a glass material.

[Table 1]

| f at λc (mm) | He-Cd 441, 6nm (m) | Ar 488nm (mm) | Ar 514,5nm (mm) | DYE 590nm (mm) | He-Ne 632.8nm (mm) | RUBY 694.3nm (mm) | LD 780nm (mm) | LD 830nm (mm) | YAG 1064nm (mm) | LD 1550nm (mm) |
|---|---|---|---|---|---|---|---|---|---|---|
| 8 | 7.9 | 8.0 | 8.0 | 8.0 | 8.1 | 8.1 | 8.1 | 8.1 | 8.2 | 8.3 |
| 9 | 8.9 | 9.0 | 9.0 | 9.0 | 9.1 | 9.1 | 9.1 | 9-2 | 9.2 | 9.3 |
| 10 | 9.9 | 9.9 | 10.0 | 10.0 | 10.1 | 10.1 | 10.1 | 10.2 | 10.2 | 10.4 |
| 12 | 11.8 | 11.9 | 12.0 | 12.0 | 12.1 | 12.1 | 12.2 | 12.2 | 12.3 | 12.5 |
| 15 | 14.8 | 14.9 | 15.0 | 15.1 | 15.1 | 15.2 | 15.2 | 15.3 | 15.4 | 15.6 |

In a first column of Table 1, the focal lengths f of the lenses with respect to a center wavelength λc in the wavelength band of the light passing through each lens are described in second to sixth rows. In columns from a second column, the wavelength of the light from each light source, wich is distributed in the wide wavelength band from the visible light range to the infrared range is described in the first row along with a name of the light source (abbreviated name), and the focal lengths f of the lenses with respect to the wavelength of the light from each light source indicated by the first row are described in the second to sixth rows.

As illustrated in Table 1, the focal length f of each lens fluctuates in association with the fluctuation of the wavelength of the passing light. In the case that the wavelength band of the light is the wide wavelength band from the visible light range to the infrared range, the fluctuation range of the focal length f of each lens becomes larger compared with the case that the wavelength band of the light is restricted to the visible light range. As described above, the image point distance fr also fluctuates in a similar way with the focal length f in association with the fluctuation of the focal length f.

In the case that an inexpensive plastic material or the like is used as the glass material for the lens, the fluctuation range is further increased.

The lens aberration also fluctuates according to the fluctuation of the wavelength of the light passing through the lens, and the fluctuation range of the lens aberration is increased with increasing wavelength band of the light similarly to the focal length.

Accordingly, the fluctuation range of the three-dimensional information on the object, such as the distance information on the object and the three-dimensional coordinate information, which are obtained by the equations (1) to (3) is also increased with increasing wavelength band of the light passing through the image capturing optical system of the stereo camera device.

In the case that the imaging characteristic that fluctuates according to the wavelength of the light passing through the image capturing optical system of the stereo camera device is not corrected, the error of the obtained three-dimensional information on the object is increased with increasing wavelength band of the light passing through the image capturing optical system of the stereo camera device.

Therefore, in the stereo camera device 300A, the degradation of the three-dimensional measurement accuracy is suppressed by correcting wavelength dependence of the imaging characteristic that is used to obtain the three-dimensional information on the object. The correction is described later.

<Configuration and Operation of Control Processing Device>

A configuration of the control processing device 100A will be described below. As illustrated in FIG. 2, the control processing device 100A mainly includes an image inputting part 11A that includes a standard image inputting part 11a and a reference image inputting part 11b, a search point setting part 12 that includes a standard point setting part 12a and a comparative point setting part 12b, a window setting part 13 that includes a standard window setting part 13a and a reference window setting part 13b, a corresponding point searching part 14, the wavelength acquiring part 15A, the parameter acquiring part 16A, a storing part 17, a 3D reconstruction part 18A, outputting parts 19 and 20, and a controller 21.

Storing Part 17, Outputting Parts 19 and 20, and Controller 21

For example, the storing part 17 in FIG. 2 includes a hard disk, a ROM, and a RAM. The storing part 17 is used to permanently store control parameters set to control each part of the stereo camera device 300A, the previously-calibrated camera parameters such as the base-line length b and the pixel length ps, a control program, and the like, and the storing part 17 is used to temporarily store various kinds of information output from each unit of the control processing device 100A.

The outputting parts 19 and 20 is an output interface constructed by a USB interface or the like, the outputting part 20 supplies the control signal supplied from the controller 21 to the stereo camera 24, and the outputting part 19 supplies the three-dimensional information e1 (FIG. 2) on the object 1, which is obtained by the control processing device 100A, and the display image g3 of the object 1 to the external system.

The controller 21 performs control necessary for each functional part of the control processing device 100A while controlling the phototaking operation of the stereo camera 24 through the outputting part 20.

The controller 21, the standard image inputting part 11a and the reference image inputting part 11b of the image inputting part 11A, the search point setting part 12, the window setting part 13, the corresponding point searching part 14, the wavelength acquiring part 15A, and the parameter acquiring part 16A may be constructed such that a CPU executes a predetermined program stored in the storing part 17 or such that a dedicated hardware circuit is used.

Image Inputting Part 11A

The image inputting part 11A in FIG. 2 mainly includes the standard image inputting part 11a and the reference image inputting part 11b each of which includes an inputting part (not illustrated) such as a USB interface.

The original standard image g1 and the original reference image g2, which are supplied from the standard camera 10a, are input to the standard image inputting part 11a and the reference image inputting part 11b. The standard image inputting part 11a and the reference image inputting part 11b supply the original standard image g1 to the wavelength acquiring part 15A in order to provide the original standard image g1 to processing of acquiring the representative wavelength λmain of the wavelength component of the light from the object 1. The standard image inputting part 11a and the reference image inputting part 11b receive supplies of the camera parameters such as aberration correction coefficients k1 to k5 that are obtained through processing performed by the parameter acquiring part 16A, apply the camera parameters to the original standard image g1 and the original reference image g2 to perform the parallelizing processing and the aberration correction processing to the original standard image g1 and the original reference image g2, generate a search standard image g4 and a search reference image g5, and supply the search standard image g4 and the search reference image g5 to the standard point setting part 12a and the comparative point setting part 12b of the search point setting part 12.

The parallelizing processing is performed by a perspective transform using the camera parameters stored in the storing part 17, and the aberration correction processing (Step S16 of the flowchart in FIG. 10) is performed through image processing using the aberration correction coefficients k1 to k5 that are generated by the parameter acquiring part 16A based on the representative wavelength λmain.

The original standard image g1 is transformed into an expanded standard image g1' by performing monochrome image expansion processing of expanding the monochrome image based on the output of only each cell including the white (W) filter in the image capturing element 5a to the same number of pixels as that of the original standard image g1 before, for example, the aberration correction processing.

Specifically, in the aberration correction processing, for example, pixel values of attention pixels of the search standard image g4 and the search reference image g5 are obtained such that weighted mean processing of the pixel value of each pixel is performed to the expanded standard image g1' and the original reference image g2 according to an overlapping degree between a pixel region of an attention pixel of each of the search standard image g4 and the search reference image g5 and a pixel region of each pixel, which is defined by a pixel position of each of the expanded standard image g1' and the original reference image g2 after the aberration correction is performed to the expanded standard image g1' and the original reference image g2 using the equation (3). The number of pixels and the image size in each of the search standard image g4 and the search reference image g5 are equal to those of each of the original standard image g1 and the original reference image g2.

Alternatively, as to the aberration correction processing, for example, the positional information on the image point (pixel) after the aberration correction is obtained by performing a simple numerical calculation using an aberration reproduction equation and an aberration reproduction coefficient, which provide an inverse transform of the equation (3), and the search standard image g4 and the search reference image g5, to which the aberration correction is performed using the positional information on the pixel may be obtained.

That is, the image inputting part 11A obtains the search standard image g4 and the search reference image g5, to which the aberration correction is performed using the aberration information including the aberration reproduction coefficient that reproduces the aberration and the aberration correction coefficient that corrects the aberration.

Similarly to the original standard image g1 and the original reference image g2, the search standard image g4 and the search reference image g5 constitute the stereo image of the object 1.

Wavelength Acquiring Part 15A

The wavelength acquiring part 15A generates the display image g3 in order to display the display image g3 on a display device of the external system based on the original standard image g1 supplied from the image inputting part 11A, namely, based on the actual measurement of the light from the object 1, and the wavelength acquiring part 15A performs processing of acquiring the representative wavelength λmain of the wavelength component of the light from the object 1 (Step S12 of the flowchart in FIG. 10).

First the generation of the display image g3 will be described. The display image g3 is a display color image that is generated based on the original standard image g1.

As described above, the image capturing element 5a of the standard camera 10a is constructed by the array of the cells having four different spectral sensitivity characteristics in FIG. 7. The wavelength acquiring part 15A can obtain the usual RGB components and infrared component by performing a calculation expressed by an equation (5) between the pixels of the original standard image g1 corresponding to the output of the cell having each characteristic.

$$B = White - Yellow$$
$$G = Red - Black$$
$$R = Red - Black \qquad \cdots (5)$$
$$Black = Black$$

[Formula 5]

The display image g3 is the color image having the obtained RGB components. In the phototaking during the nighttime, because the infrared component is increased, the color image, in which the infrared component is transformed into the G component to enhance visibility may be used as the display image g3.

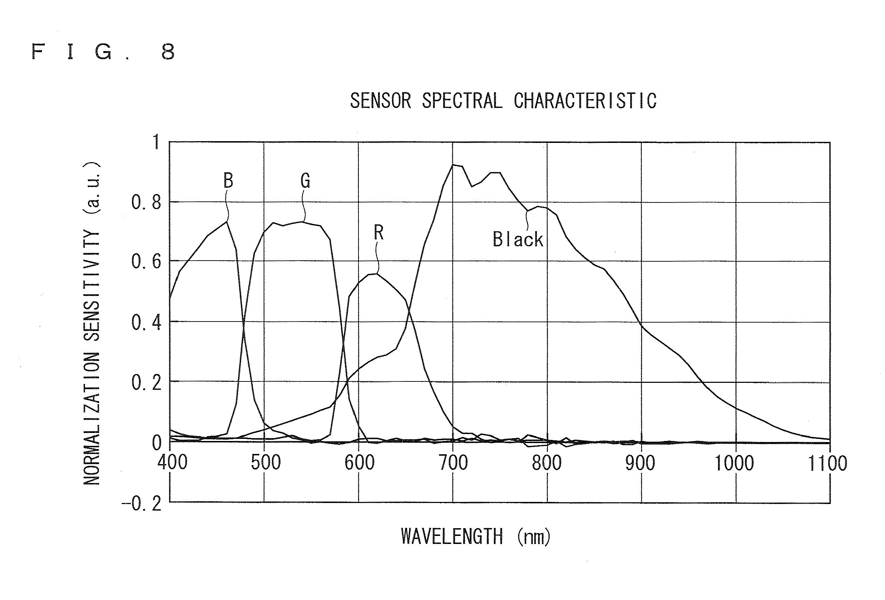

FIG. 8 is a view illustrating spectral sensitivity characteristic of virtual RGB sensors (cells) that output the above-described RGB components and a spectral sensitivity characteristic of the cell including the black filter that outputs the infrared component.

The processing of acquiring the representative wavelength $\lambda$main of the wavelength component of the light from the object 1, which is performed by the wavelength acquiring part 15A, will be described below.

In the wavelength acquiring part 15A, for example, a processing method in which the four spectral sensitivity characteristics in FIG. 8 are utilized may be adopted as the method for acquiring the representative wavelength $\lambda$main.

In an example of the processing method, a barycentric wavelength $\lambda$b of the B component is set to 450 nm, a barycentric wavelength $\lambda$g of the G component is set to 530 nm, a barycentric wavelength $\lambda$r of the R component is set to 620 nm, and a barycentric wavelength $\lambda$black of the Black component is set to 800 nm.

A product sum of the output value of each of the components R, G, B, and Black and a barycentric wavelength of each component is obtained with respect to the whole image that is generated from the original standard image g1 by the calculation of the equation (5), and a barycentric calculation in which the product sum is divided by the sum of the output values of the components is performed using a calculation equation expressed by an equation (6), thereby acquiring the representative wavelength $\lambda$main of the wavelength component of the light from the object 1.

[Formula 6]

$$\lambda main = (\lambda b \times \Sigma B + \lambda g \times \Sigma G + \lambda r \times \Sigma R + \lambda Black \times \Sigma Black) \div (\Sigma B + \Sigma G + \Sigma R + \Sigma Black) \qquad \cdots (6)$$

Alternatively, various techniques such that the barycentric wavelength of the component that provides the maximum intensity in the output values of the components R, G, B, and Black is used as the representative wavelength $\lambda$main may be adopted as the technique of acquiring the representative wavelength $\lambda$main.

The "representative wavelength" includes a representative value, such as a square value of a frequency or the wavelength and a representative value of an inverse number, which is physically or mathematically equivalent to the representative wavelength.

The display image g3 acquired by the wavelength acquiring part 15A is supplied to and stored in the storing part 17, and the representative wavelength $\lambda$main is supplied to the parameter acquiring part 16A and used to acquire the parameter value corresponding to the representative wavelength $\lambda$main, and the parameter value is the value of the camera parameter having the wavelength dependence.

Parameter Acquiring Part 16A

Regarding the focal length information, the aberration information, and the like, which are of the camera parameters having the wavelength dependence, the parameter acquiring part 16A performs processing of acquiring the parameter value corresponding to the representative wavelength $\lambda$main supplied from the wavelength acquiring part 15A (Step S14 of the flowchart in FIG. 10).

At this point, for example, even if the parameter value corresponding to the representative wavelength $\lambda$main is calculated with respect to only some of all the camera parameters having the wavelength dependence and used in the three-dimensional measurement, because the degradation of the three-dimensional measurement accuracy can be suppressed compared with the case that the wavelength dependence of the camera parameter is not corrected, the value of the present invention is not lost.

Thus, the parameter acquiring part 16A acquires the parameter value corresponding to the representative wavelength $\lambda$main with respect to at least one of the camera parameters of the stereo camera 24 in which the parameter value fluctuates according to the wavelength component of the light from the object 1.

Specifically, as to the method for acquiring the focal length fmain corresponding to the representative wavelength λmain, a wavelength dependence characteristic t1 (FIG. 2) of each of the parameters such as the shortest wavelength λmin and the longest wavelength λmax in the wavelength range of the representative wavelength λmain and focal lengths fmin and fmax corresponding to the wavelengths λmin and λmax is previously acquired by a simulation and so on based on optical design information and stored in the storing part 17, and the focal length fmain corresponding to the representative wavelength λmain is obtained by interpolation using the wavelengths λmin and λmas and the focal lengths fmin and fmax.

Alternatively, as to the method for acquiring the focal length fmain, for example, a table in which values of the focal lengths corresponding to at least two predetermined wavelengths in the wavelength range of the representative wavelength λmain are recorded is previously obtained by a simulation and stored as the wavelength dependence characteristic t1 of the parameter in the storing part 17, and the table may be used to calculate the focal length fmain.

Alternatively, as to the method for acquiring the focal length fmain, a monotonically increasing function or a monotonically decreasing function, hyperbolic function, which defines a relationship of the focal length to the wavelength in the wavelength range of the representative wavelength λmain, is previously obtained by a simulation and stored as the wavelength dependence characteristic t1 of the parameter in the storing part 17, and the function may be used to calculate the focal length fmain.

For example, the parameter value corresponding to the representative wavelength λmain can be acquired by a simple estimation method using the table, and the parameter value corresponding to the representative wavelength λmain can be acquired with respect to the camera parameter having the complicated wavelength dependence using the function.

For example, the image point distance fr corresponding to the obtained representative wavelength λmain is acquired by a technique of adding a difference between a standard value of the focal length f and the focal length fmain corresponding to the representative wavelength λmain to a standard value of the image point distance fr and a technique, in which a relationship between the image point distance fr and the representative wavelength λmain is obtained in the form of the function or the table in the wavelength range of the representative wavelength λmain and stored as one of the wavelength dependence characteristics t1 of the parameters, and the stored function or table is referred to during the acquisition of the image point distance fr.

Similarly the aberration correction coefficients k1 to k5 (equation (3)) corresponding to the representative wavelength λmain is acquired using the wavelength dependence characteristic t1 of the parameter that is obtained by simulations of the aberration correction coefficients k1 to k5.

Even if the same glass material is used, the imaging characteristics of the image capturing optical systems 2a and 2b differs from each other in each produced optical system due to the error during the production. However, usually the difference is small compared with the fluctuation range of each imaging characteristic with respect to the fluctuation of the representative wavelength λmain, and the products are substantially identical to each other in a fluctuation tendency of the imaging characteristic. Therefore, the value of the present invention is not lost even if the standard wavelength dependence characteristic of the parameter common to each produced optical system is used.

In the case that the difference of the imaging characteristic is corrected in each produced optical system, for example, the standard wavelength dependence characteristic of the parameter is acquired by the simulation, the imaging characteristics corresponding to the representative wavelength are actually measured with respect to the image capturing optical systems 2a and 2b of each product, and the standard wavelength dependence characteristic of the parameter is deviated based on the difference between the measured value and the standard value of the imaging characteristic, whereby the wavelength dependence characteristic t1 of the parameter may be acquired in each of the image capturing optical systems 2a and 2b. In this technique, the degradation of the three-dimensional measurement accuracy of the stereo camera device 300A can further be suppressed compared with a technique of applying the standard wavelength dependence characteristic of the parameter to all the products of the image capturing optical system.

The technique of acquiring the one representative wavelength λmain for the whole image is described in the description of wavelength acquiring part 15A and the parameter acquiring part 16A. However, in the nighttime, sometimes the whole image is not in the same illumination state.

In such cases, for example, the each representative wavelength is obtained with respect to each of standard points set by the standard point setting part 12a of the search point setting part 12, and the representative wavelengths are used to acquire the parameter. Therefore, the degradation of the three-dimensional measurement accuracy can further be suppressed.

For example, the representative wavelengths are acquired with respect to each standard point such that the equations (5) and (6) are calculated for each standard window that is set to each standard point in the original standard image g1 by the standard window setting part 13a of the window setting part 13.

In the above described parameters, the aberration correction coefficients k1 to k5 that are of the aberration information are supplied to the image inputting part 11A and used in the aberration corrections (Step S16 of the flowchart in FIG. 10) of the original standard image g1 and the original reference image g2, which are already described in the description of the image inputting part 11A. The image point distance fr is supplied to the 3D reconstruction part 18A and used to acquire the three-dimensional information on the object 1.

FIG. 9 is a view explaining an example of the corresponding point searching processing performed by the control processing device 100A. The search point setting part 12, the window setting part 13, and the corresponding point searching part 14 will be described with reference to FIG. 9.

Search Point Setting Part 12

The search point setting part 12 in FIG. 2 mainly includes the standard point setting part 12a and the comparative point setting part 12b.

The standard image inputting part 11a of the image inputting part 11A supplies the search standard image g4 (FIGS. 2 and 9) to the standard point setting part 12a, and the standard point setting part 12a sets a standard point Nm into the search standard image g4. The reference image inputting part 11b supplies the search reference image g5 (FIGS. 2 and 9) to the comparative point setting part 12b, and the comparative point setting part 12b sets a comparative point Km into the search reference image g5. The standard point Nm is one that is set to search the corresponding point between the search standard image g4 and the search reference image g5, and the comparative point Km is one that becomes a standard of a window setting for searching a corresponding point Cpm corresponding to the standard point Nm.

Specifically, for example, the standard point Nm is set by a technique, in which edge detection processing is performed to the search standard image g4 to detect a specific point and the specific point is set as the standard point Nm, or a technique of sequentially setting all the pixels of the search standard image g4 as the standard point Nm.

For example, the comparative point Km is set such that a predetermined initial parallax is provided to the comparative point Km or such that the edge detection processing is performed on the same condition as the standard point Nm.

The set standard point Nm and comparative point Km are supplied to the standard window setting part 13a and the reference window setting part 13b of the window setting part 13, respectively.

Window Setting Part 13

As illustrated in FIG. 2, the window setting part 13 mainly includes the standard window setting part 13a and the reference window setting part 13b.

The standard window setting part 13a sets a standard window WBm onto the search standard image g4 based on the supplied standard point Nm, and the reference window setting part 13b sets a reference window WRm onto the search reference image g5 based on the supplied comparative point Km.

The standard window WBm and the reference window WRm are equal to each other in the number of pixels in the horizontal direction (a U-direction in FIG. 9) and in the number of pixels in the vertical direction (a V-direction in FIG. 9).

The pieces of setting information on the standard window WBm and the reference window WRm are supplied to the corresponding point searching part 14, and a corresponding point search is performed to the images of both the windows by a correlation calculation.

Corresponding Point Searching Part 14

The standard window setting part 13a and the reference window setting part 13b of the window setting part 13 supply the pieces of setting information on the standard window WBm and the reference window WRm to the corresponding point searching part 14 in FIG. 2, and the corresponding point searching part 14 performs the correlation calculation to the images of both the windows to search the corresponding point CPm on the search reference image g5, which corresponds to the standard point Nm on the search standard image g4.

Specifically, a technique such as an SAD method (Sam of Absolute Difference) in which frequency resolution is not performed or a technique such as an POC method (Phase Only Correlation) in which frequency resolution is performed is adopted as the technique of obtaining the correlation between the images of the standard window WBm and the reference window WRm, and the corresponding point searching part 14 performs the corresponding point search with sub-pixel accuracy.

The standard point Nm and the corresponding point CPm, in each of which the aberration is corrected, and a corresponding point search result hl(FIG. 2) of the parallax d (equation (1)) in which the aberration of the parallax d1 in FIG. 3 before the aberration correction is corrected are obtained through the corresponding point search by these technique.

That is, the corresponding point searching part 14 performs the corresponding point search (Step S18 of the flowchart in FIG. 10) by obtaining the correlation between the search standard image g4 and the search reference image g5, which constitute the stereo image of the object 1.

The acquired corresponding point search result h1 is supplied to the 3D reconstruction part 18A and used to acquire the three-dimensional information on the object 1.

3D reconstruction Part 18A

The storing part 17 supplies the stored camera parameters such as the pieces of optical center position information u0 and v0 (FIG. 2, and equations (2) and (3)) and pixel length ps (FIG. 2 and equation (2)) to the 3D reconstruction part 18A in FIG. 2, the parameter acquiring part 16A supplies the image point distance fr that is of the camera parameter having the wavelength dependence corresponding to the representative wavelength λmain to the 3D reconstruction part 18A, and the corresponding point searching part 14 supplies the corresponding point search result h1 to the 3D reconstruction part 18A. The 3D reconstruction part 18A acquires the pieces of three-dimensional information e1 (FIG. 2) such as the distance information on the object 1 and the three-dimensional coordinate information on the object 1 using the supplied pieces of information (Step S20 of the flowchart in FIG. 10).

Specifically, for example, the pieces of three-dimensional information such as the distance D from the principal point 3a of the image capturing optical system 2a to the object point M on the object 1 and the three-dimensional coordinate in the camera coordinate system C1 are calculated using the equations (1) and (2).

The parallax d in which the aberrations of the standard camera 10a and the reference camera 10b are corrected with respect to the object point M is used in this technique.

Alternatively, as to the three-dimensional information acquiring technique, for example, equations of camera visual lines passing through the standard point Nm and the corresponding point CPm are obtained from pieces of coordinate information on the standard point Nm and the corresponding point CPm, and the equations are simultaneously solved to obtain the three-dimensional coordinate of the object point M that is obtained as an intersection point of the camera visual lines.

That is, using the parameter value corresponding to the representative wavelength λmain of the camera parameter having the wavelength dependence, the 3D reconstruction part 18A acquires the three-dimensional information e1 on the object 1 from the corresponding point search result h1 such as the parallax d and the pieces of coordinate information on the standard point Nm and the corresponding point CPm.

The acquired three-dimensional information e1 is supplied to the outputting part 19, and the three-dimensional information e1, the display image g3, and the like are supplied from the outputting part 19 to the external system such as the in-vehicle system and the monitoring system and used to assist the running safety of the vehicle and to detect an abnormality.

As described above in the parameter acquiring part 16A, even if the parameter value corresponding to the representative wavelength λmain is calculated with respect to only some of all the camera parameters having the wavelength dependence and used in the three-dimensional measurement, because the degradation of the three-dimensional measurement accuracy can be suppressed compared with the case that the wavelength dependence of the camera parameter is not corrected, the value of the present invention is not lost.

Accordingly, the 3D reconstruction part 18A may adopt a configuration, in which some of the camera parameters having the wavelength dependence, specifically the parameter values of one of the pieces of focal length information and the pieces of aberration information on the image capturing optical system 2a and the image capturing optical system 2b are acquired from the parameter acquiring part 16A, the parameter values of other camera parameters are acquired from storing part 17, and the three-dimensional information is acquired based on the parameters.

As described above, according to the stereo camera device 300A, the representative wavelength λmain of the wavelength component of the light from the object 1 is acquired, the parameter value corresponding to the representative wavelength λmain with respect to at least one of the camera parameters in which the parameter value fluctuates according to the wavelength component of the light from the object 1 is acquired and used to acquire the three-dimensional information e1 on the object 1. Therefore, the degradation of the three-dimensional measurement accuracy of the stereo camera device 300A can be suppressed even if the stereo camera device 300A takes the image of the object 1 in the wide wavelength band.

When one of the cameras constituting the stereo camera 24 of the stereo camera device 300A is the camera having the above color characteristic while the other camera is the camera having the spectral sensitivity characteristic of only the white filter of the visible light range to the infrared range, the stereo camera device 300A can acquire both the color information on the object 1 and the three-dimensional information on the object 1, acquire the display image g3 that may improve operability of the external system on which the stereo camera device 300A is mounted based on the color information, and acquire the representative wavelength λm of the wavelength component of the light from the object 1.

The three-dimensional information on the object 1 is acquired based on the corresponding point search result of the monochrome image based on the output of the cell including the white (W) filter that can take the image of the light from the object 1 in the wide wavelength band from the visible light range to the infrared range, so that a probability that the three-dimensional information on the object 1 can be acquired can be enhanced even if the stereo camera device 300A takes the image of the object 1 in the wide wavelength band.

In the stereo camera device 300A, when at least one of the two images used in the corresponding point search is the image from the image capturing element including the white (W) filter having the high pixel density, for example, the corresponding point search can be performed with higher resolution compared with the corresponding point search performed between the color images, so that the degradation of the three-dimensional measurement accuracy can further be suppressed.

<First Modification>

A stereo camera device 300B that is of a modification of the stereo camera device 300A of the embodiment will be described below.

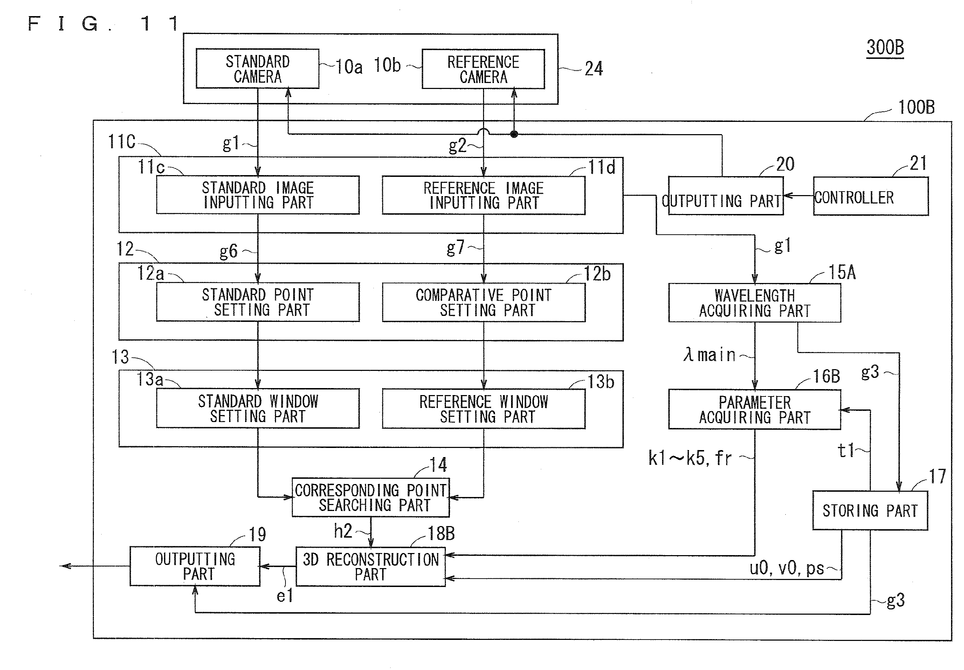

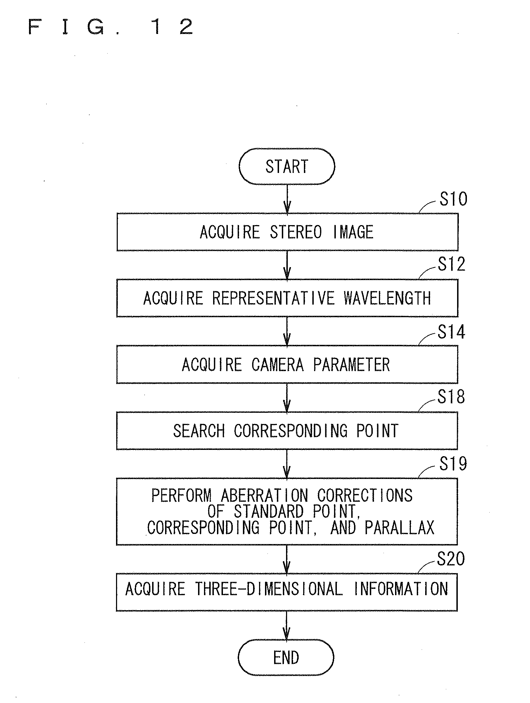

FIG. 11 is a view illustrating a functional block of the stereo camera device 300B according to the modification. FIG. 12 is a view illustrating a flowchart of three-dimensional information measurement of the stereo camera device 300B according to the modification.

Similarly to the stereo camera device 300A, in the stereo camera device 300B in FIG. 11, the wavelength acquiring part 15A of a control processing device 100B acquires the representative wavelength $\lambda$main of the wavelength component of the light from the object 1 based on the image input from the stereo camera 24, the parameter value of the camera parameter used to acquire the three-dimensional information is acquired based on the representative wavelength $\lambda$main, and the three-dimensional information on the object 1 is acquired. However, the stereo camera device 300B differs from the stereo camera device 300A in a functional block that corrects the aberration using the aberration information in the camera parameters and target data of the aberration correction.

Specifically, as illustrated in FIG. 11, the stereo camera device 300B includes the same functional parts as the stereo camera device 300A in FIG. 2 except an image inputting part 11C, a parameter acquiring part 16B, and a 3D reconstruction part 18B.

As illustrated in FIG. 12, the flowchart of the three-dimensional information measurement of the stereo camera device 300B is identical to the flowchart in FIG. 10 of the three-dimensional information measurement of the stereo camera device 300A except that Step S16 is eliminated while Step S19 is newly added.

In the functional blocks of the stereo camera 24 and the control processing device 100B of the stereo camera device 300B and processing steps of the three-dimensional information measurement in FIGS. 11 and 12, the same functional blocks and processing steps as the functional blocks of the stereo camera device 300A and the processing steps of the three-dimensional information measurement in FIGS. 2 and 10 are designated by the same symbols as the functional blocks and the processing steps in FIGS. 2 and 10, and the descriptions are omitted. In the functional blocks of the stereo camera device 300B and the processing steps of the three-dimensional information measurement, only the functional blocks and the processing steps, which differ from the functional block and the processing steps of the three-dimensional information measurement of the stereo camera device 300A, will be described below.

Image Inputting Part 11C

The image inputting part 11C of the control processing device 100B in FIG. 11 mainly includes a standard image inputting part 11c and a reference image inputting part 11d.

As illustrated by the flowchart in FIG. 12, the standard image inputting part 11c and the reference image inputting part 11d perform neither the aberration correction processing (Step S16 of the flowchart of the stereo camera device 300A in FIG. 10) nor the parallelizing processing to the original standard image g1 and the original reference image g2, which are supplied from the standard camera 10a and the reference camera 10b of the stereo camera 24, respectively.

That is, the standard image inputting part 11c performs only the monochrome image expansion processing to the original standard image g1 and supplies the original standard image g1 as a search standard image g6 to the standard point setting part 12a of the search point setting part 12, and the reference image inputting part 11d directly supplies the original reference image g2 as a search reference image g7 to the comparative point setting part 12b of the search point setting part 12.

As for the supply of the original standard image g1 to the wavelength acquiring part 15A, the image inputting part 11C has the same function as the image inputting part 11A of the stereo camera device 300A.

Parameter Acquiring Part 16B

As described above, because the aberration correction of the stereo image is not performed in the image inputting part 11C, the parameter acquiring part 16B in FIG. 11 supplies not only the image point distance fr but also the aberration correction coefficients k1 to k5 in the acquired camera parameter to the 3D reconstruction part 18B.

The method in which the parameter acquiring part 16B acquires the camera parameter is identical to the technique performed by the parameter acquiring part 16A of the stereo camera device 300A in FIG. 2.

3D reconstruction Part 18B

The corresponding point searching part 14 supplies a corresponding point search result h2 that is searched based on the search standard image g6 and the search reference image g7, to which the aberration correction is not performed yet, to the 3D reconstruction part 18B in FIG. 11.

In the state in which the parallelizing processing and the aberration correction are not performed, the corresponding point search result h2 includes the coordinate at the standard point that is of the image point on the search standard image g6, which corresponds to the object point M on the object 1, the coordinate at the corresponding point (the image point on the search reference image g7, which corresponds to the object point M) on the search reference image g7, which corresponds to the standard point, and the pieces of parallax information on the standard camera 10a and the reference camera 10b.

First, for example, the 3D reconstruction part 18B performs the parallelizing processing to the standard point, the corresponding point, and the parallax information, and performs the aberration correction to the standard point, the corresponding point, and the parallax information using the aberration correction equation (3) (Step S19 of the flowchart in FIG. 12). Then, similarly to the 3D reconstruction part 18A of the stereo camera device 300A, the 3D reconstruction part 18B acquires the three-dimensional information e1 on the object 1 and supplies the three-dimensional information e1 on the object 1 to the outputting part 19.

As described above, in the stereo camera device 300B, similarly to the stereo camera device 300A, the representative wavelength λmain of the wavelength component of the light from the object 1 is acquired, the parameter value corresponding to the representative wavelength λmain with respect to at least one of the camera parameters in which the parameter value fluctuates according to the wavelength component of the light from the object 1 is acquired and used to acquire the three-dimensional information e1 on the object 1. Therefore, the degradation of the three-dimensional measurement accuracy of the stereo camera device 300B can be suppressed even if the stereo camera device 300B takes the image of the object 1 in the wide wavelength band.

<Second Modification>

A stereo camera device 300C that is of a modification of the stereo camera device 300B will be described below.

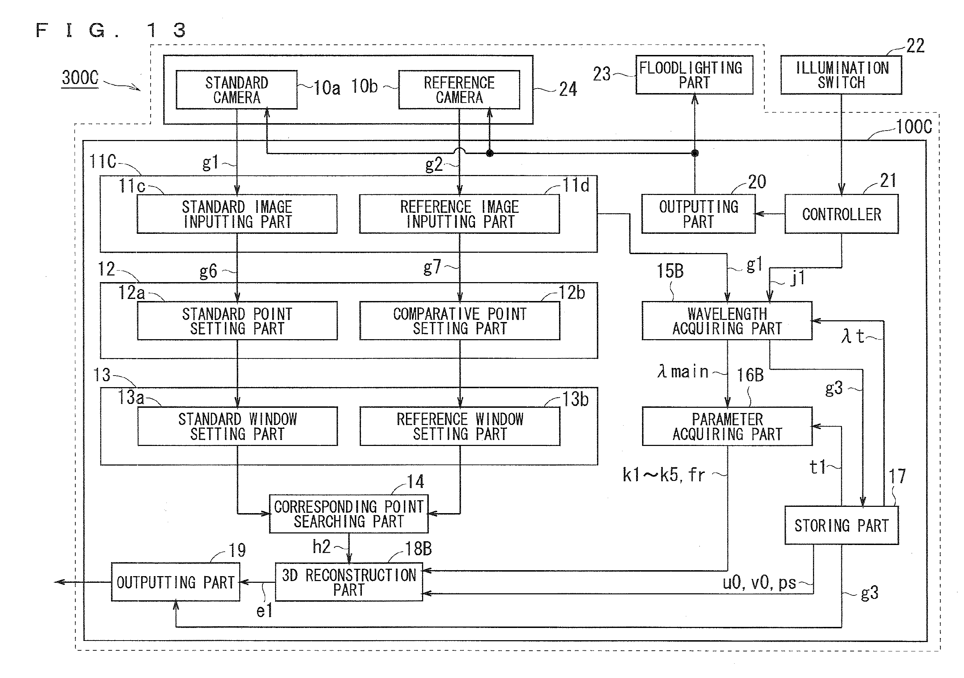

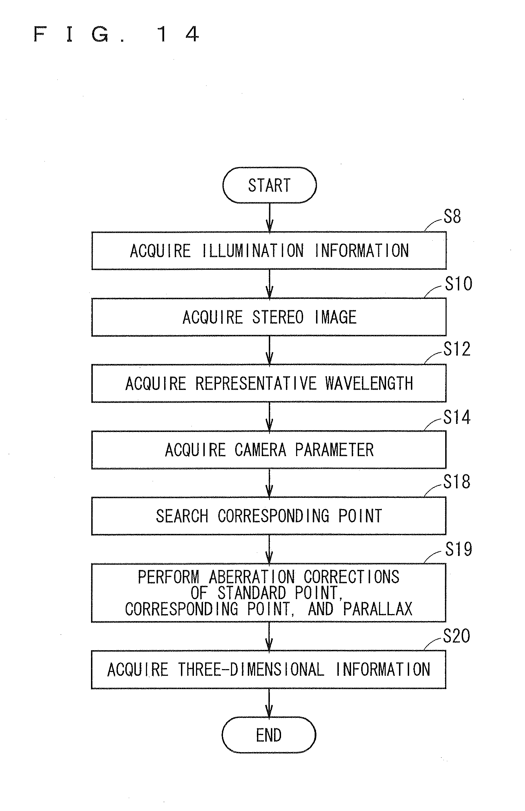

FIG. 13 is a view illustrating a functional block of the stereo camera device 300C according to the modification. FIG. 14 is a view illustrating a flowchart of three-dimensional information measurement of the stereo camera device 300C according to the modification.

For example, the stereo camera device 300C in FIG. 13 is one that is applied to the monitoring system installed in a shopping mall, and the stereo camera device 300C acquires the representative wavelength λmain by a simpler technique than that of the stereo camera devices 300A (FIG. 2) and 300B (FIG. 11).

Usually the monitoring system of the shopping mall detects the abnormality based on the image information illuminated with a fluorescent light during open of the shopping mall. On the other hand, during the nighttime after the closing time, the fluorescent lights used during the open of the shopping mall are turned off, and the stereo camera device 300C needs to work as the monitoring system in the dark.

Therefore, as illustrated in FIG. 13, the stereo camera device 300C includes a floodlighting part 23 as an auxiliary illumination system that irradiates a monitoring region of the monitoring system with the infrared ray in conjunction with the stereo camera 24 and the control processing device 100C.

The fluorescent lights and the like of the shopping mall are lit on and tuned off such that a user of the monitoring system manipulates an illumination switch 22 provided outside of the stereo camera device 300C.

The stereo camera device 300C detects the illumination state in the monitoring region of the monitoring system by detecting ON/OFF signals of the illumination switch 22, floodlighting part 23 irradiates the monitoring region with the infrared ray when the fluorescent lights and the like are turned off, and the stereo camera device 300C acquires the representative wavelength λmain of the wavelength component of the light from the object 1 based on pieces of well-known wavelength information on the illumination light and the infrared ray of the fluorescent light or the like.

The stereo camera device 300C can also be applied to the in-vehicle system. In this case, for example, a headlight switch acts as the illumination switch 22.

In the case that the stereo camera device 300C is applied to the in-vehicle system, because the image of the object 1 illuminated mainly with the sunlight is taken in the daytime, the stereo camera device 300C also has the function of acquiring the representative wavelength λmain based on the image of the object 1 whose image is taken with the stereo camera 24 similarly to the stereo camera device 300A and the stereo camera device 300B.

At this point, as illustrated in FIG. 13, the stereo camera device 300C includes the same functional parts as the stereo camera device 300B in FIG. 11 except a wavelength acquiring part 15B and the floodlighting part 23.

As illustrated in FIG. 14, the flowchart of the three-dimensional information measurement of the stereo camera device 300C is identical to the flowchart in FIG. 12 of the three-dimensional information measurement of the stereo camera device 300B except that Step S8 is newly added.

In the functional blocks of the stereo camera 24 and the control processing device 100C of the stereo camera device 300C and processing steps of the three-dimensional information measurement in FIGS. 13 and 14, the same functional blocks and processing steps as the functional blocks of the stereo camera device 300B and the processing steps of the three-dimensional information measurement in FIGS. 11 and 12 are designated by the same symbols as the functional blocks and the processing steps in FIGS. 11 and 12, and the descriptions are omitted. In the functional blocks of the stereo camera device 300C and the processing steps of the three-dimensional information measurement, only the functional blocks and the processing steps, which differ from the functional block and the processing steps of the three-dimensional information measurement of the stereo camera device 300B, will be described below.

Floodlighting Part 23

The floodlighting part 23 in FIG. 13 is the auxiliary illumination system that floodlights the monitoring region of the monitoring system or the like with the infrared ray, and ON/OFF of the infrared illumination of the floodlighting part 23 is controlled by a control signal from the controller 21.

The wavelength component of the infrared ray from the floodlighting part 23 is well known, and the barycentric wavelength of the well-known wavelength component and the like are stored as the illumination light wavelength $\lambda t$ in the storing part 17. Similarly, in the fluorescent light of the shopping mall, the barycentric wavelength and the like are stored as the illumination light wavelength $\lambda t$ in the storing part 17.

The floodlighting part 23 may be located outside the stereo camera device 300C such that the floodlighting part 23 belongs to the external system such as the in-vehicle system and the monitoring system.

The controller 21 acquires illumination information j1 on the object 1 based on the ON/OFF signals from the illumination switch 22 (Step S8 of the flowchart in FIG. 14).

When detecting the ON signal from the illumination switch 22, the controller 21 acquires information on the lit-on fluorescent light as the illumination information j1. When detecting the OFF signal from the illumination switch 22, the controller 21 supplies a lighting control signal to the floodlighting part 23 to light on the floodlighting part 23 and acquires information on the lit-on infrared ray as the illumination information j1.

For example, using an open schedule information stored in the storing part 17 or a light receiving sensor that is separately provided so as to be able to detect the light in the monitoring region of the monitoring system, the controller 21 may acquire the illumination information j1 without detecting the ON/OFF signals from the illumination switch 22.

Wavelength Acquiring Part 15B

The wavelength acquiring part 15B in FIG. 13 acquires an illumination light wavelength $\lambda t$ corresponding to the illumination information j1 from illumination light wavelengths $\lambda t$ corresponding to illumination lights stored previously in the storing part 17 based on the illumination information j1 supplied from the controller 21.

The wavelength acquiring part 15B acquires the acquired illumination light wavelength $\lambda t$ as the representative wavelength $\lambda main$ of the wavelength component of the light from the object 1.

The wavelength acquiring part 15B supplies the acquired representative wavelength $\lambda main$ to the parameter acquiring part 16B. Similarly to the stereo camera device 300B, the parameter acquiring part 16B acquires the camera parameter corresponding to the representative wavelength $\lambda main$, and the camera parameter is used to acquire the three-dimensional information e1 in the 3D reconstruction part 18B.

As described above, in the stereo camera device 300C, the processing of acquiring the representative wavelength $\lambda main$ based on the image information on the original standard image g1 is eliminated, and the representative wavelength $\lambda main$ can be acquired based on the well-known wavelength information on the illumination light with which the object 1 is irradiated. Therefore, the stereo camera device 300C adopts the simple configuration and processing to be able to estimate the representative wavelength $\lambda main$ of the light from the object in the wide wavelength band of the visible light range to the infrared range, and the degradation of the three-dimensional information measurement accuracy, which is caused by the wavelength dependence of the camera parameter, can be suppressed.

In the configuration example in FIG. 13, the illumination information j1 acquired by the controller 21 is supplied to the wavelength acquiring part 15B, the wavelength acquiring part 15B acquires the representative wavelength $\lambda main$, and the parameter acquiring part 16B acquires the parameter value of the camera parameter corresponding to the representative wavelength $\lambda main$. Alternatively, for example, the illumination information j1 acquired by the controller 21 is supplied to the parameter acquiring part 16B, the parameter acquiring part 16B may acquire the parameter value of the camera parameter corresponding to the illumination information j1 based on the illumination information j1 with no use of the representative wavelength λmain.

As to the acquisition of the illumination information j1, an illumination-state selector different from the illumination switch 22 is provided in the control processing device 100C. The monitoring-system user who performs the ON/OFF manipulations of the illumination switch 22 sets the illumination-state selector based on the manipulation content, and the controller 21 may acquire the illumination information j1 based on the setting.

DESCRIPTION OF SYMBOLS

| | |
|---|---|
| 300A, 3008, 300C | Stereo camera device |
| 100A, 100B, 100C | Control processing device |
| 1 | Object |
| M | Object point |
| 2a, 2b | Image capturing optical system |
| 3a, 3b | Principal point |
| 4a, 4b | Optical axis |
| 5a, 5b | Image capturing element |
| 6a, 6b | Principal ray |
| 7a, 7b | Optical center position |
| Pa, Pb | Image point |
| 10a | Standard camera |
| 10b | Reference camera |
| 11A, 11C | Image inputting part |
| 11a, 11c | Standard image inputting part |
| 11b, 11d | Reference image inputting part |
| 12 | Point setting part |
| 12a | Standard point setting part |
| 12b | Comparative point setting part |
| 13 | Window setting part |
| 13a | Standard window setting part |
| 13b | Reference window setting part |
| 14 | Corresponding point searching part |
| 15A, 15B | Wavelength acquiring part |
| 16A, 16B | Parameter acquiring part |
| 17 | Storing part |
| 18A, 18B 3D | reconstruction part |
| 19, 20 | Outputting part |
| 21 | Controller |
| 22 | Illumination switch |
| 23 | Floodlighting device |
| 24 | Stereo camera |
| 25a, 25b | Control processing circuit |
| g1 | Original standard image |
| g2 | Original reference image |
| g3 | Display image |
| g4, g6 | Search standard image |
| g5, g7 | Search reference image |
| λmain | Representative wavelength |
| λt | Illumination light wavelength |
| t1 | Dependence characteristic of parameter on wavelength |
| k1, k2, k3, k4, k5 | Aberration correction coefficient |
| fr | Image point distance |
| b | Base-line length |
| u0, v0 | Optical center position information |
| ps | Pixel size |

h1, h2            Corresponding point search result
j1                Illumination information

**Claims**

1. A stereo camera device comprising:

   stereo image acquiring means for taking an image of light from an object to acquire a stereo image;
   corresponding point searching means for performing a corresponding point search between images constituting said stereo image;
   wavelength acquiring means for acquiring a representative wavelength of a wavelength component of said light;
   parameter acquiring means for acquiring each parameter value corresponding to said representative wavelength with respect to at least one of camera parameters of said stereo image acquiring means in which said parameter value fluctuates according to said wavelength component; and
   three-dimensional information acquiring means for acquiring three-dimensional information on said object from a result of said corresponding point search using said each parameter value.

2. The stereo camera device according to claim 1, wherein
   said wavelength acquiring means acquires said representative wavelength based on actual measurement of said light from said object.

3. The stereo camera device according to claim 2, wherein
   said stereo image acquiring means includes an image capturing element having a plurality of spectral sensitivity characteristics, and
   said wavelength acquiring means acquires said representative wavelength based on an output signal of said image capturing element according to each of said plurality of spectral sensitivity characteristics.

4. The stereo camera device according to claim 1, wherein
   said wavelength acquiring means acquires said representative wavelength based on well-known wavelength information on illumination light illuminating said object.

5. The stereo camera device according to claim 4, further comprising floodlighting means for floodlighting said illumination light.

6. The stereo camera device according to claim 1, wherein
   said parameter acquiring means acquires said each parameter value using a camera parameter table in which well-known parameter values corresponding to at least two predetermined wavelengths are recorded with respect to said at least one of camera parameters.

7. The stereo camera device according to claim 1, wherein
   said parameter acquiring means acquires said each parameter value using each function that defines a relationship between said wavelength component and a parameter value with respect to said at least one of camera parameters.

8. The stereo camera device according to claim 1, wherein
   said at least one of camera parameters includes at least one of focal length information and aberration information on an image capturing optical system of said stereo image acquiring means.Q

F I G .  1

300A

100A

g2

g1

10b

10a

24

1

F I G . 2

300A

STANDARD CAMERA — 10a  10b — REFERENCE CAMERA — 24

100A

11A

g1

g2

OUTPUTTING PART — 20    CONTROLLER — 21

11a — STANDARD IMAGE INPUTTING PART

11b — REFERENCE IMAGE INPUTTING PART

12    g4

g5

g1

12a — STANDARD POINT SETTING PART

12b — COMPARATIVE POINT SETTING PART

15A — WAVELENGTH ACQUIRING PART

13

$\lambda$ main

g3

13a — STANDARD WINDOW SETTING PART

13b — REFERENCE WINDOW SETTING PART

16A — PARAMETER ACQUIRING PART

fr

t1

14 — CORRESPONDING POINT SEARCHING PART

k1~k5

17 — STORING PART

h1    18A

19 — OUTPUTTING PART

3D RECONSTRUCTION PART

u0, v0, ps

e1

g3

EP 2 522 951 A1

21

F I G . 3

# FIG. 4

F I G . 5

| W | Ye | W | Ye |
|-----|-----|-----|-----|
| Red | Blk | Red | Blk |
| W | Ye | W | Ye |
| Red | Blk | Red | Blk |

5a

F I G . 6

| W | W | W | W |
|---|---|---|---|
| W | W | W | W |
| W | W | W | W |
| W | W | W | W |

5b

SENSOR SPECTRAL CHARACTERISTIC

SENSOR SPECTRAL CHARACTERISTIC

WAVELENGTH (nm)

EP 2 522 951 A1

F I G . 9

F I G . 1 0

```
                    ┌─────────┐
                    │  START  │
                    └─────────┘
                         │
                         ▼                         ╭S10
        ┌──────────────────────────────────┐
        │       ACQUIRE STEREO IMAGE        │
        └──────────────────────────────────┘
                         │
                         ▼                         ╭S12
        ┌──────────────────────────────────┐
        │     ACQUIRE REPRESENTATIVE        │
        │           WAVELENGTH              │
        └──────────────────────────────────┘
                         │
                         ▼                         ╭S14
        ┌──────────────────────────────────┐
        │     ACQUIRE CAMERA PARAMETER      │
        └──────────────────────────────────┘
                         │
                         ▼                         ╭S16
        ┌──────────────────────────────────┐
        │      CORRECT IMAGE ABERRATION     │
        └──────────────────────────────────┘
                         │
                         ▼                         ╭S18
        ┌──────────────────────────────────┐
        │     SEARCH CORRESPONDING POINT    │
        └──────────────────────────────────┘
                         │
                         ▼                         ╭S20
        ┌──────────────────────────────────┐
        │     ACQUIRE THREE-DIMENSIONAL     │
        │            INFORMATION            │
        └──────────────────────────────────┘
                         │
                         ▼
                    ┌─────────┐
                    │   END   │
                    └─────────┘
```

27

EP 2 522 951 A1

F I G .  1 2

```
                    ┌─────────────┐
                    │    START    │
                    └──────┬──────┘
                           │            ╭─ S10
          ┌────────────────▼────────────────┐
          │      ACQUIRE  STEREO  IMAGE      │
          └────────────────┬────────────────┘
                           │            ╭─ S12
          ┌────────────────▼────────────────┐
          │ ACQUIRE  REPRESENTATIVE  WAVELENGTH │
          └────────────────┬────────────────┘
                           │            ╭─ S14
          ┌────────────────▼────────────────┐
          │     ACQUIRE  CAMERA  PARAMETER   │
          └────────────────┬────────────────┘
                           │            ╭─ S18
          ┌────────────────▼────────────────┐
          │     SEARCH  CORRESPONDING  POINT │
          └────────────────┬────────────────┘
                           │            ╭─ S19
          ┌────────────────▼────────────────┐
          │  PERFORM ABERRATION CORRECTIONS  │
          │         OF STANDARD POINT,        │
          │ CORRESPONDING POINT, AND PARALLAX │
          └────────────────┬────────────────┘
                           │            ╭─ S20
          ┌────────────────▼────────────────┐
          │ ACQUIRE THREE-DIMENSIONAL INFORMATION │
          └────────────────┬────────────────┘
                           │
                    ┌──────▼──────┐
                    │     END     │
                    └─────────────┘
```

FIG. 13

EP 2 522 951 A1

F I G . 1 4

```
                    ( START )
                        │
                        ▼                        ┌─ S8
        ┌────────────────────────────────────┐
        │   ACQUIRE  ILLUMINATION  INFORMATION │
        └────────────────────────────────────┘
                        │
                        ▼                        ┌─ S10
        ┌────────────────────────────────────┐
        │        ACQUIRE  STEREO  IMAGE        │
        └────────────────────────────────────┘
                        │
                        ▼                        ┌─ S12
        ┌────────────────────────────────────┐
        │  ACQUIRE  REPRESENTATIVE  WAVELENGTH │
        └────────────────────────────────────┘
                        │
                        ▼                        ┌─ S14
        ┌────────────────────────────────────┐
        │       ACQUIRE  CAMERA  PARAMETER     │
        └────────────────────────────────────┘
                        │
                        ▼                        ┌─ S18
        ┌────────────────────────────────────┐
        │      SEARCH  CORRESPONDING  POINT    │
        └────────────────────────────────────┘
                        │
                        ▼                        ┌─ S19
        ┌────────────────────────────────────┐
        │   PERFORM  ABERRATION  CORRECTIONS   │
        │          OF  STANDARD  POINT,        │
        │  CORRESPONDING  POINT,  AND  PARALLAX │
        └────────────────────────────────────┘
                        │
                        ▼                        ┌─ S20
        ┌────────────────────────────────────┐
        │  ACQUIRE  THREE-DIMENSIONAL  INFORMATION │
        └────────────────────────────────────┘
                        │
                        ▼
                     ( END )
```

31

<table>
<tr><td colspan="2"><b>INTERNATIONAL SEARCH REPORT</b></td><td>International application No.<br>PCT/JP2010/072651</td></tr>
</table>

| A. CLASSIFICATION OF SUBJECT MATTER |
| --- |
| *G01B11/00*(2006.01)i, *G01C3/06*(2006.01)i, *G06T1/00*(2006.01)i, *H04N5/225*(2006.01)i, *H04N13/02*(2006.01)i, *G01B11/245*(2006.01)n |

According to International Patent Classification (IPC) or to both national classification and IPC

| B. FIELDS SEARCHED |
| --- |
| Minimum documentation searched (classification system followed by classification symbols)<br>G01B11/00-11/30, G01C3/00-3/32, G06T1/00-1/40;3/00-5/50;9/00-9/40,<br>H04N5/222-5/257, H04N13/00-17/06 |

| Documentation searched other than minimum documentation to the extent that such documents are included in the fields searched |
| --- |
| Jitsuyo Shinan Koho     1922-1996   Jitsuyo Shinan Toroku Koho   1996-2011<br>Kokai Jitsuyo Shinan Koho   1971-2011   Toroku Jitsuyo Shinan Koho   1994-2011 |

| Electronic data base consulted during the international search (name of data base and, where practicable, search terms used) |
| --- |
| |

### C. DOCUMENTS CONSIDERED TO BE RELEVANT

| Category* | Citation of document, with indication, where appropriate, of the relevant passages | Relevant to claim No. |
| --- | --- | --- |
| A | JP 2006-52975 A (Nikon Corp.),<br>23 February 2006 (23.02.2006),<br>entire text; fig. 1 to 9<br>(Family: none) | 1-8 |
| A | JP 2004-7213 A (Canon Inc.),<br>08 January 2004 (08.01.2004),<br>entire text; fig. 1 to 18<br>(Family: none) | 1-8 |
| A | JP 2004-37270 A (Topcon Corp.),<br>05 February 2004 (05.02.2004),<br>entire text; fig. 1 to 20<br>& US 2004/0066454 A1    & EP 1378790 A2 | 1-8 |

[X] Further documents are listed in the continuation of Box C.      [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11 January, 2011 (11.01.11) | Date of mailing of the international search report<br>25 January, 2011 (25.01.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/072651 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-288042 A  (Nikon Corp.), 10 December 2009 (10.12.2009), entire text; fig. 1 to 13 (Family: none) | 1-8 |
| A | JP 7-49944 A  (Canon Inc.), 21 February 1995 (21.02.1995), entire text; fig. 1 to 17 & US 6191808 B1        & EP 637815 A2 | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007033315 A